# EUROPÄISCHE PATENTSCHRIFT

(11) **EP 1 363 774 B1**
(45) Veröffentlichungstag und Bekanntmachung des Hinweises auf die Patenterteilung: **04.08.2004**
(21) Anmeldenummer: 02702305.0
(22) Anmeldetag: 24.01.2002
(51) Int. Cl.: B32B 27/32, B65D 65/40, C08L 53/02, C08L 25/06

(54) **VERPACKUNGSFOLIE, INSBESONDERE DREHEINSCHLAGFOLIE, UND VERFAHREN ZU IHRER HERSTELLUNG**
PACKAGING FILM, IN PARTICULAR TWIST-WRAPPING FILM AND METHOD FOR PRODUCTION THEREOF
FEUILLE D'EMBALLAGE, EN PARTICULIER FEUILLE D'EMBALLAGE FERMEE PAR TORSION, ET PROCEDE DE FABRICATION DE LADITE FEUILLE

(30) Priorität: 05.02.2001 DE 10105125
(43) Veröffentlichungstag der Anmeldung: 26.11.2003
(73) Patentinhaber: Nordenia Deutschland Gronau GmbH, 48599 Gronau (DE)
(72) Erfinder: HAMULSKI, Markus, 48599 Gronau (DE); SCHÄFER, Peter, 48565 Steinfurt (DE)
(74) Vertreter: Albrecht, Rainer Harald, Dr.-Ing.
(86) Internationale Anmeldenummer: PCT/EP2002/000689
(87) Internationale Veröffentlichungsnummer: WO 2002/062576

(56) Entgegenhaltungen:
- WO-A-98/22281
- WO-A-98/52749

## Beschreibung

Die Erfindung betrifft Folien, die als Dreheinschlagfolien, geeignet sind und, die mindestens drei Schichten polymerer Kunststoffe umfassen, und ein Verfahren zur Herstellung solcher Folien.

Im Handel ist eine Vielzahl von Folien zum Verpacken von unterschiedlichsten Produkten erhältlich. Bei der Verpackung von Süßwaren , wie Bonbons und Pralinen, werden Dreheinschlagfolien verwendet, wobei bei diesen Folien ein gutes Deadfold, d. h. geringes Rückstellvermögen, gute Steifigkeit sowie Transparenz und Brillanz erwünscht sind.

Noch heute werden allerdings ca. 1/3 der Süßwaren-Dreieinschlagpackungen aus Wachspapier hergestellt. Wachspapier besitzt jedoch den Nachteil, daß je nach Packgut unterschiedliche Mengen der Wachsschicht auf das Packgut übertragen werden. Dies kann wiederum dazu führen, daß die Bonbons und Pralinen an ihrer Oberfläche unansehnlich werden oder gar eine Beeinträchtigung des Geschmacks erfahren.

Eine für den Dreheinschlag geeignete Alternative stellen Folien auf Cellophanbasis dar. Den günstigen Eigenschaften solcher Folien, wie Reißfestigkeit, Transparenz und Aromadichtigkeit, stehen jedoch die komplizierte und kostspielige Produktion, sowie das oft als störend empfundene Knistern der Cellophanschutzhülle entgegen. Eine geringe Bedeutung besitzen auch PVC-Folien, die wie Cellophanfolien teuer in der Herstellung sind.

Die preiswerteren bedruckbaren Polypropylenfolien, die teilweise auch streifenmetallisiert werden, sind vor allem im Bereich der Twist- bzw. Bonbon-Dreheinschlagfolien eine Alternative, da es mit diesen möglich ist Bonbons mit einer Geschwindigkeit von bis zu 1400 Stück pro Minute abzupacken. Eine alternativ im Dreheinschlagverfahren einsetzbare Folie basiert auf High-Density-Polyethylen und zeichnet sich durch einen hohen Gehalt an mineralischen Füllstoffen aus, so daß sie sich wie Papier anfühlt. Die Verarbeitungseigenschaften dieser Folie sind denen des Wachspapiers sehr ähnlich.

D1 (W09822281) offenbart ein durch Coextrusion hergestelltes, mehr- bzw. 3-schichtiges A/B/A Verpackungsmaterial für Dreheinschlagfolien bzw. Twistverpackungen bestehend aus einer
- inneren Schicht B, welche ein Styrol/Styrol-Butadien-Copolymer Blend enthält und
- beidseitig die angrenzenden Schichten A, welche aus einem siegelfähigem Polypropylen-haltigen Kunststoff gebildet wird.
Dieses Verbundmaterial ist explizit als Twistverpackung für stückige Verpackungsgüter wie Bonbons verwendbar.

D2 (W09852749) offenbart eine coextrudierte B/A/B Verbundfolie mit Polypropylen in der Mitte und den äußeren Schichten einer PS/SEBS- compatibilizer Mischung. Die Anwendung wird jedoch zielgerichtet auf Verwendung in Fenstern in Briefumschlägen beschränkt.
Diese Verwendung bringt die Verklebung der Folien auf Papier mit sich.

Die Aufgabe der vorliegenden Erfindung war es, eine verbesserte Folie zu verwenden als Dreheinschlagfolie zu verwenden. Die verbesserte Folie sollte neben sehr guten Dreheigenschaften, hoher Steifigkeit sowie guter Schneidbarkeit bzw. Stanzbarkeit auch hinsichtlich ihrer Dehnfähigkeit, Durchstoßfestigkeit und Wirtschaftlichkeit den bekannte Verpackungsfolien überlegen sein und bei einer sehr guten Transparenz und hohem Glanz hervorragende Barrierefunktionen besitzen.

Diese Aufgabe konnte mit einer Verpackungsfolie gelöst werden, die aus mindestens drei Schichten polymerer Kunststoffe besteht, bei welcher die innere Schicht Polyolefine und/oder Olefin-Copolymere enthält und auf beiden Seiten der inneren Schicht mindestens je eine weitere Schicht vorhanden ist, die eine Mischung aus Styrol-Butadien- Styrol- Blockcopolymeren und Polystyrol-Homopolymeren enthält.

Die Gesamtdicke der Folie unterliegt keinen besonderen Beschränkungen, sondern hängt im wesentlichen von der Art des Verpackungsgutes sowie wirtschaftlichen Erwägungen ab, liegt jedoch üblicherweise im Bereich von 10-50 µm, insbesondere 15-40 µm und besonders bevorzugt im Bereich von 20-25 µm.

Das Dickenverhältnis der inneren Schicht zu den Dicken der beiden an diese angrenzenden Schichten unterliegt ebenfalls keinen grundlegenden Beschränkungen. Es hat sich jedoch als vorteilhaft herausgestellt, wenn das Verhältnis der Dicke der auf jeder Seite der inneren Schicht vorhandenen Schicht zur Dicke der inneren Schicht 1:1 bis 1:6 beträgt. Besonders bevorzugt ist ein Verhältnis von 1:2 bis 1:4.

Die innere Schicht enthält im wesentlichen Polyolefine und/oder Olefin-Copolymere oder besteht aus diesen. So kann der Kern auch gänzlich aus Polyolefinen und/oder Olefin-Copolymeren bestehen. Als besonders geeignet haben sich Polymere auf Basis von Ethylen und Propylen, sowie deren Mischungen untereinander oder mit anderen Olefinen, wie z. B. Buten erwiesen. Der Einsatz solcher Polyolefine bzw. Olefin-Copolymere führt insbesondere zu einer Verbesserung der Dehnfähigkeit, Durchstoßfestigkeit und Wasserdampfbarriereeigenschaften, d. h. einem Schutz vor Austrocknung und Gewichtsverlust, im Fall von feuchten Füllgütern bzw. einem Schutz vor Feuchtigkeitsaufnahme, im Fall von trockenen Füllgütern, sowie einem Schutz vor Schimmelbildung. Außerdem wird durch die Verwendung der Polyolefine bzw. Olefin-Copolymere die Wirtschaftlichkeit des Produkts erhöht.

Durch den Einsatz von Mischungen aus Styrol-Butadien-Styrol-Blockcopolymeren mit Polystyrol-Homopolymeren werden der Folie sehr gute Dreheigenschaften, hohe Steifigkeit und erleichterte Schneid- bzw. Stanzbarkeit verliehen.

Die erfindungsgemäßen Folien können, sofern auf die Transparenz verzichtet wird, auch mit lebensmittelverträglichen Pigmenten eingefärbt werden, wie z. B. Titandioxid, um z. B. eine weiße Folie zu erhalten. Aufgrund des Aufbaus der Folie ist auch eine gute Bedruckbarkeit gewährleistet. Eine weitere Beschichtung dieser Folien, um diese z. B. mit weiteren Barriereeigenschaften auszustatten, ist ebenfalls möglich. Hierbei kommt z. B. eine Metallisierung, wie z. B. eine Aluminiumbedampfung, eine Beschichtung oder Bedampfung mit anorganischen Materialien wie z. B. SiOₓ oder Al₂O₃, in Frage. Es ist zudem eine Beschichtung durch Plasmapolymerisation oder mit Poly(vinylidenchlorid) oder organisch anorganischen Hybridpolymeren möglich.

Die vorliegende Erfindung betrifft die Verwendung der erfindungsgemäßen Folien als Dreheinschlagfolie. Das für den Dreheinschlag notwendige geringe Rückstellvermögen stellt nur einen der Vorteile der erfindungsgemäßen Folie dar.

Die nachfolgend aufgeführten Beispiele sollen zur Verdeutlichung der Erfindung dienen (Hinweis: Soweit nicht anders definiert, handelt es sich bei den %-Angaben um Gewichtsprozente).

### Beispiel 1:

Auf einer Blasfolienextrusionsanlage (Düsendurchmesser 315 mm) wird eine Dreischicht-Verpackungfolie coextrudiert. Die innere Schicht besteht aus einem Polyethylen-Copolymer mit Buten, wobei die Dichte des Polyethylens 0,918 bis 0,940 g/cm³ entspricht und der Schmelzindex zwischen o,7 bis 4 g/10 min. bei 190°C und 2,16 kg liegt. Die beiden an der inneren Schicht angrenzenden Schichten setzen sich aus 10 bis 80 Gew-% Styrol-Butadien-Styrol-Blockcopolymer und 90 bis 20 Gew.-% Polystyrol zusammen. Zusätzlich wird ein Antistatikum eingesetzt.

Die Gesamtdicke der Folie beträgt 25 µm, wobei die Dicke der beiden äußeren Schichten jeweils 5 µm und die der inneren Schicht 15 µm beträgt. Verwendung der Folie: Dreheinschlagfolie für Karamell-Bonbons.

### Beispiel 2:

Auf einer Coextrusionsbreitschlitzdüsenanlage wird eine Dreischicht-Vepackungsfolie coextrudiert. Für die innere Schicht wird ein Polypropylen-Randomcopolymer mit Ethylen eingesetzt (Dichte des Polypropylens beträgt 0.902 g/cm³ und der Schmelzindex beträgt 6 g/10 min. bei 230 °C und 2,16 kg). Die beiden an der inneren Schicht angrenzenden Schichten setzen sich, wie in Beispiel 1 beschrieben zusammen.

Die Gesamtdicke der Folie beträgt 20 µm.

### Vergleichsbeispiel 1:

Auf einer Coextrusionsbreitschlitzdüsenanlage wie in Beispiel 2 beschrieben, wird eine Dreischichtfolie coextrudiert. Die innere Schicht der Folie besteht aus einem Polypropylen-Randomcopolymer, wie es in Beispiel 2 beschrieben ist. Die an die innere Schicht angrenzenden Schichten werden aus einem Polypropylen-Homopolymer der Dichte 0,910 g/cm³, mit einem Schmelzindex von 10 g/10 min. bei 230°C und 2,16 kg extrudiert.

Die Gesamtdicke der Folie beträgt 20 µm.

### Bewertung der Beispiele bzw. des Vergleichsbeispiels

Während die Folien der Beispiele 1 und 2 die erfindungsgemäßen hervorragenden Eigenschaften besitzen, sich insbesondere durch die hervorragenden optischen Eigenschaften, die gute Verarbeitbarkeit auf gängigen Dreheinschlagmaschinen und einen sehr guten Schutz für das eingeschlagene Produkt auszeichnen, ist die in Vergleichsbeispiel 1 erhaltene Folie aufgrund ihrer mangelhaften Steifigkeit und der nicht ausreichend guten Schneideigenschaften als Dreheinschlagfolie nur bedingt geeignet.

## Patentansprüche

1. Verwendung einer dreischichtigen, durch Coextrusion hergestellten Kunststofffolie mit
a) einer inneren Schicht aus Polyolefinen und/oder Olefin-Copolymeren und
b)auf beiden Seiten der inneren Schicht angrenzenden Außenschicht, die jeweils aus einer Mischung aus Styrol-Butadien-Styrol-Blockcopolymeren und Polystyrol-Homopolymeren bestehen,
als Verpackungsfolie für Dreheinschlagverpackungen.

2. Verwendung einer Kunststofffolie nach Anspruch 1, mit der Maßgabe, dass die Kunststofffolie eine Dicke von 15 bis 50 µm aufweist.

3. Verwendung einer Kunststofffolie nach Anspruch 2, mit der Maßgabe, dass die Dicke 20 bis 25 µm beträgt.

4. Verwendung einer Kunststofffolie nach einem der Ansprüche 1 bis 3, mit der Maßgabe, dass das Dickenverhältnis jeder Außenschicht zur Dicke der inneren Schicht 1:1 bis 1:6 beträgt.

5. Verwendung einer Kunststofffolie nach Anspruch 4, mit der Maßgabe, dass das Dickenverhältnis 1:2 bis 1:4 beträgt.

6. Verwendung einer Kunststofffolie nach einem der Ansprüche 1 bis 5, mit der Maßgabe, dass die innere Schicht aus Polyethylen, Polypropylen, Polyethylen-Copolymer, Polypropylen-Copolymer, deren Mischungen oder Mischungen mit anderen Olefinen besteht.

7. Verwendung einer Kunststofffolie nach einem der Ansprüche 1 bis 6, mit der Maßgabe, dass die polymere Mischung der Außenschichten sich aus 10 bis 80 Gew.% Styrol-Butadien-Styrol-Blockcopolymeren und 90 bis 20 Gew.% Polystyrol zusammensetzt.

8. Verwendung einer Kunststofffolie nach einem der Ansprüche 1 bis 7, mit der Maßgabe, dass die Folienschichten zusätzlich Pigmente enthalten.

9. Verwendung einer Kunststofffolie nach einem der Ansprüche 1 bis 8, mit der Maßgabe, dass die Kunststofffolie mindestens eine zusätzliche Deckschicht aufweist, die durch Bedampfung oder Beschichtung mit Metallen, anorganischen Materialien, Polyvinylidenchlorid oder organisch-anorganischen Hybridpolymeren oder durch Plasmapolymerisation aufgebracht wurde.

## Claims

1. Use of a three-layer plastic film made by coextrusion and having
a) an inner layer of polyolefins and/or of olefin copolymers and
b) outer layers adjacent to either side of the inner layer, said outer layers consisting each of a mixture of styrene-butadiene-styrene block copolymers and of polystyrene homopolymers,
as a packaging film for twist-wrap packaging.

2. Use of a plastic film in accordance with claim 1, with the proviso that the plastic film has a thickness of from 15 to 50 µm.

3. Use of a plastic film in accordance with claim 2, with the proviso that it has a thickness of from 20 to 25 µm.

4. Use of a plastic film in accordance with any of the claims 1 through 3, with the proviso that the thickness ratio of each outer layer to the inner layer ranges from 1:1 to 1:6.

5. Use of a plastic film in accordance with claim 4, with the proviso that the thickness ratio ranges from 1:2 to 1:4.

6. Use of a plastic film in accordance with any of the claims 1 through 5, with the proviso that the inner layer consists of polyethylene, polypropylene, polyethylene copolymer, polypropylene copolymer, of mixtures thereof or of mixtures with other olefins.

7. Use of a plastic film in accordance with any of the claims 1 through 6, with the proviso that the polymeric mixture of the outer layers is composed of 10 to 80 wt. % styrene-butadiene-styrene block copolymers and 90 to 20 wt. % polystyrene.

8. Use of a plastic film in accordance with any of the claims 1 through 7, with the proviso that the film layers additionally contain pigments.

9. Use of a plastic film in accordance with any of the claims 1 through 8, with the proviso that the plastic film comprises at least one additional cover layer that was vapor coated or coated with metals, inorganic materials, polyvinylidene chloride or organic-inorganic hybrid polymers or that was applied by plasma polymerization.

## Revendications

1. Utilisation d'un film plastique à trois couches fabriqué par coextrusion avec
a) une couche interne en polyoléfines et/ou en copolymères d'oléfine et
b) des couches externes placées de part et d'autre de la couche interne et contiguës à celle-ci, chacune des couches externes consistant en un mélange de copolymères bloc styrène-butadiène-styrène et d'homopolymères polystyrène,
comme film d'emballage pour l'enveloppement complet du produit à emballer.

2. Utilisation d'un film plastique selon la revendication 1, à condition que le film plastique ait une épaisseur comprise entre 15 et 50 µm.

3. Utilisation d'un film plastique selon la revendication 2, à condition que l'épaisseur soit comprise entre 20 et 25 µm.

4. Utilisation d'un film plastique selon l'une quelconque des revendications 1 à 3, à condition que le rapport entre l'épaisseur de chaque couche externe et l'épaisseur de la couche interne soit compris entre 1 :1 et 1 :6.

5. Utilisation d'un film plastique selon la revendication 4, à condition que le rapport entre les épaisseurs soit compris entre 1 :2 et 1 :4.

6. Utilisation d'un film plastique selon l'une quelconque des revendications 1 à 5, à condition que la couche interne soit constituée de polyéthylène, de polypropylène, d'un copolymère polyéthylène, d'un copolymère polypropylène, de leurs mélanges ou de mélanges avec d'autres oléfines.

7. Utilisation d'un film plastique selon l'une quelconque des revendications 1 à 6, à condition que le mélange de polymères des couches externes soit composé, en pourcent en poids, de 10 à 80 copolymères bloc styrène-butadiène-styrène et de 90 à 20 polystyrène.

8. Utilisation d'un film plastique selon l'une quelconque des revendications 1 à 7, à condition que les couches du film contiennent en plus des pigments.

9. Utilisation d'un film plastique selon l'une quelconque des revendications 1 à 8, à condition que le film plastique comporte au moins une couche de recouvrement supplémentaire de métal, de matériau inorganique, de chlorure de polyvinylidène ou de polymères hybrides organiques-inorganiques déposée par évaporation ou sous forme d'un revêtement ou bien obtenue par polymérisation plasma.
